(19) Europäisches Patentamt
European Patent Office
Office européen des brevets

(11) EP 2 360 196 A1

(12) EUROPEAN PATENT APPLICATION

(43) Date of publication:
**24.08.2011 Bulletin 2011/34**

(21) Application number: **10001459.6**

(22) Date of filing: **12.02.2010**

(51) Int Cl.:
***C08G 18/08*** (2006.01) ***C08G 18/10*** (2006.01)
***C08G 18/32*** (2006.01) ***C08G 18/72*** (2006.01)
***C08G 18/75*** (2006.01) ***C08G 18/77*** (2006.01)
***C08G 18/80*** (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Stichting Dutch Polymer Institute
5612 AB Eindhoven (NL)**

(72) Inventor: **The designation of the inventor has not yet been filed**

(74) Representative: **Renkema, Jaap
IPecunia Patents B.V.
P.O. Box 593
6160 AN Geleen (NL)**

# (54) Polyurethane prepolymer and aqueous polyurethane dispersion

(57) The invention relates to a polyurethane prepolymer prepared by reacting a mixture comprising a short-chain renewable diisocyanate and a long-chain renewable diisocyanate and one or more diols. The short-chain renewable diisocyanate has at most 10 atoms and at most two ether group between the two isocyanate groups, and has at most 16 carbon atoms in the molecule. The long-chain renewable diisocyanate has either more than 12 atoms or more than ether group between the two isocyanate groups, or has more than 20 carbon atoms in the molecule. The invention also relates to an aqueous dispersion comprising the polyurethane prepolymer and a coating obtainable from the prepolymer.

EP 2 360 196 A1

## Description

The present invention relates to a polyurethane prepolymer prepared from renewable resources. The present invention also relates to an aqueous dispersion of such polyurethane prepolymer or chain-extended polyurethane-urea prepared from such polyurethane preoplymer. The present invention further relates to a polyurethane or polyurethane-urea coating obtainable from such polyurethane prepolymer.

Polyurethane compositions are useful in a variety of applications, including coatings, adhesives, sealants, elastomers, and flexible or rigid foams. There is a demand in the industry for polyurethane coating systems based on renewable building blocks as replacement of petrochemical resources.

The typically known and favorable properties of polyurethanes, such as flexibility and toughness, chemical resistance, wear resistance etc, are the result of the simultaneous occurrence of so-called "hard blocks" and "soft blocks" homogeneously in the material. "Hard blocks" and "soft blocks" used in the field of polyurethanes generally have a glass transition temperature of 0 °C or more and less than 0 °C measured by differential scanning calorimetry, respectively.

G. Lligades et. al, Biomacromolecules 2007, 8, 686-692 "Poly(ether urethane) Networks from Renewable Resources as Candidate Biomaterials: Synthesis and Characterization" discloses synthesis of a series of poly(ether urethane) networks from epoxidized methyl-oleate-based polyether polyols and 1,3-propandiol using L-lysine diisocyanate as a nontoxic coupling agent. It mentions that polyurethanes with different hard segment contents were prepared to tune the final properties of the materials.

US2009/0253816 discloses a composition for preparing a biodegradable polyurethane foam, comprising mixtures based on poly (hydroxybutyrate) polymer, polyols of renewable source, isocyanates and additives.

US2006/0004175 describes a method for producing a polyurethane prepolymer having terminal isocyanates groups, said method comprising reacting one or more polyisocyanates with one or more polyols, wherein a) at least one asymmetric diisocyanate is used; b) at least one polyols having an average molecular weight (Mn) of 60 to 3000 g/mol is used; the ratio of isocyanate groups to hydroxyl groups is set in the range between 1.1:1 to 4:1; and d) at least one carboxamide is used as a catalyst. US6515164 describes a process for producing a low-monomer polyurethane prepolymer containing free isocyanate groups obtained by reacting one or more polyhydric alcohols and two or more diisocyanates. The polyhydric alcohol is short-chain reacted with a non-symmetrical diisocyanate to form a reaction product. The reaction product is reacted with a symmetrical aromatic diisocyanate.

Although these publications describe polyurethanes with certain favorable properties, there is still a demand in the industry for polyurethanes having various properties which can be applied to a broad range of fields. Especially, there is still a need for polyurethanes which are environmentally friendly and which can be used for a broad range of applications.

It is an object of the present invention to provide an environmentally friendly polyurethane having favorable properties.

Accordingly, the present invention provides a polyurethane prepolymer prepared by reacting a mixture comprising a short-chain renewable diisocyanate and a long-chain renewable diisocyanate and one or more diols,
wherein the short-chain renewable diisocyanate has at most 10 atoms and at most two ether groups between the two isocyanate groups and has at most 16 carbon atoms in the molecule, and
wherein the long-chain renewable diisocyanate has either more than 12 atoms or more than two ether groups between the two isocyanate groups, or has more than 20 carbon atoms in the molecule.

The present invention provides a new possibility of controlling properties of a polyurethane prepolymer or polyurethane-based film (hereinafter also referred as a polyurethane product). Instead of controlling the diols as in the conventional processes for adjusting properties of the polyurethane product, the present inventors realized that diisocyanates can be selected to control the properties of polyurethane products. Specifically, the present inventors realized that the use of the combination of a short-chain renewable diisocyanate and a long-chain renewable diisocyanate provides a new window of possibilities to easily obtain polyurethane products having desired properties which may be difficult to obtain by controlling polyols. For example, it was particularly difficult to obtain a polyurethane product which is highly non-polar and/or flexible with the conventional process, since the renewable diisocyanates which have typically been used have a narrow range of properties, typically of a generally polar nature and are inflexible, rendering high Tg materials. According to the present invention, it is made possible to obtain a polyurethane product which is highly non-polar and/or flexible by use of a long-chain renewable diisocyanate, even when the amount of a long-chain diol that can be used is limited for a specific application. An extremely highly non-polar and/or flexible polyurethane product may be obtained by the use of a large proportion of a long-chain diisocyanate and a large proportion of a long-chain diol.

It is understood that the term 'renewable' material is herein meant as a material derived from a material of vegetable and/or animal origin and not from petrochemical resources.

Atoms between two groups are herein understood to mean the atoms that connect the two groups in the shortest distance.

The short-chain renewable diisocyanate has a relatively short chain between the two isocyanate groups. The

number of the atoms between the two isocyanate groups of the short-chain renewable diisocyanate is relatively low, at most 10. Preferably, the number of the atoms between the two isocyanate groups of the short-chain renewable diisocyanate is at most 6, more preferably at most 5. There may be two ether groups between the two isocyanate groups of the short-chain renewable diisocyanate, but preferably there are only carbon atoms between the two isocyanate groups. Furthermore, the number of carbon atoms of the short-chain renewable diisocyanate is relatively low, at most 16. Preferably, the number of carbon atoms of the short-chain renewable diisocyanate is at most 11. The number of carbon atoms of the short-chain renewable diisocyanate may also be at most 7. The short-chain renewable diisocyanate has a relatively polar character.

Preferably, the short-chain renewable diisocyanate is chosen from the group consisting of a lysine-based ester diisocyanate, a furan-based diisocyanate, a difuran-based diisocyanate, an isoidide-based diisocyanate, an isomannide-based diisocyanate, an isosorbide-based diisocyanate, a putrescine-based diisocyanate, a cadaverine-based diisocyanate, a spermine-based diisocyanate and a spermidine-based diisocyanate. An example of the lysine-based ester diisocyanate has a formula (I):

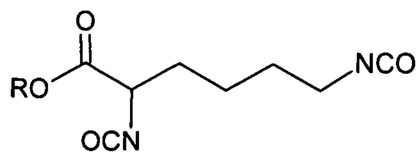

(I)

wherein OR is an alkoxy group of C1-C8, such as methoxy, ethoxy, isopropoxy, butoxy and the like. Among this, particularly preferred is methyl ester lysine diisocyanate.

Examples of the isosorbide-based diisocyanate include diisocyanatoisoidide, represented by formulas (II) and (III):

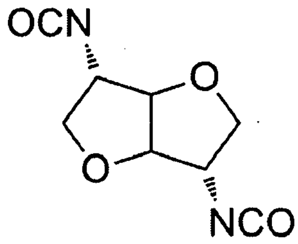

(II)

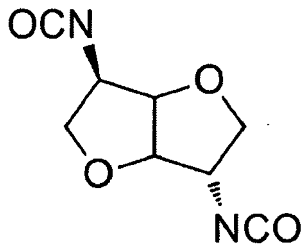

(III)

An example of the difuran-based diisocyanate has a formula (IV):

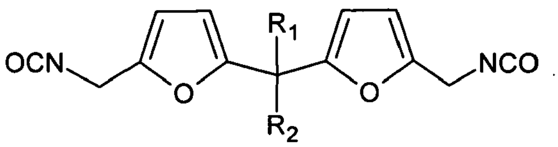

(IV)

wherein $R_1$ and $R_2$ may be the same or different and each represent hydrogen, an alkyl group, an alkoxy group or an ester group with the proviso that the sum of the number of carbon atoms in $R_1$ and $R_2$ groups is 0 to 3. When $R_1$= $R_2$=H, the diisocyanate is 5,5'-(propane-2,2-diyl)bis(2-(isocyanatomethyl)furan). The two unsaturated rings may also be saturated. In this case, the diisocyanate is 5,5'-(propane-2,2-diyl)bis(2-(isocyanatomethyl)tetrahydrofuran) when $R_1 = R_2$=H.

The number of the atoms between the two isocyanate groups of the long-chain renewable diisocyanate is relatively high, more than 12. Preferably, the number of the atoms between the two isocyanate groups of the long-chain renewable diisocyanate is more than 15. Preferably, the number of the atoms between the two isocyanate groups of the long-chain renewable diisocyanate is at most 100, more preferably at most 50, even more preferably at most 20. There may be more than two ether groups between the two isocyanate groups of the long-chain renewable diisocyanate. Additionally or alternatively, the number of carbon atoms of the long-chain renewable diisocyanate is relatively high, more than 20. Preferably, the number of carbon atoms of the long-chain renewable diisocyanate is more than 30. Preferably, the number of the carbon atoms of the long-chain renewable diisocyanate is at most 100, more preferably at most 70, even more preferably at most 50.

Preferably, the long-chain diisocyanate is a dimer fatty acid-based diisocyanate or a diisocyanate formed from the fatty acid chosen from the group consisting of capric acid, lauric acid, myristic acid, myristoleic acid, palmitic acid, palmitoleic acid, stearic acid, oleic acid, linoleic acid, alpha-linoleic acid, gamma-linoleic acid, stearidonic acid, rumenic acid, beta-calendic acid, eleostearic acid, puninic acid, parinaric acid, pinolenic acid, arachidic acid, eicosenoic acid, eicosadienoic acid, eicosatrienoic acid, dihomo-gamma-linolenic acid, mead acid, eicosatetraenoic acid, arachidonic acid, eicosapentaenoic acid.

Particularly preferred as the long-chain renewable diisocyanate is a dimer fatty acid-based diisocyanate. This diisocyanate has an advantage that it has a high UV stability, as well as its highly non-polar character and flexibility. Furthermore, this diisocyanate is commercially available. An example of the dimer fatty acid-based diisocyanate has a formula (V):

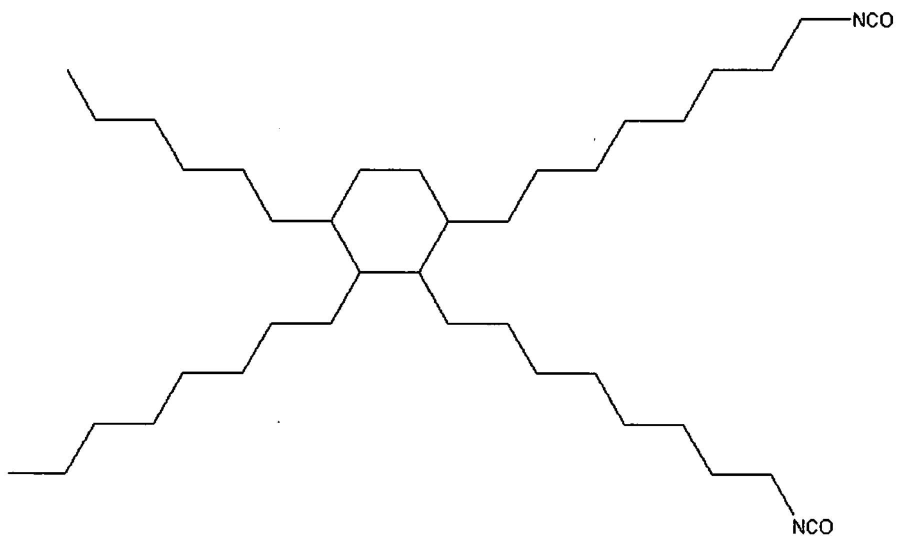
(V)

Another example of the dimer fatty acid-based diisocyanate has a formula represented by formula (V) in which the $CH_2$-$CH_2$ bond in the cyclic hexane is replaced by CH=CH.

A polyurethane product exclusively based on the short-chain renewable diisocyanates has a tendency to have a generally polar character. On the other hand, a polyurethane product exclusively based on the long-chain renewable diisocyanates has a tendency to have a generally non-polar character. A polyurethane product exclusively based on the short-chain renewable diisocyanates typically has a higher glass transition temperature Tg than a polyurethane exclusively based on the long-chain renewable diisocyanate. The polarity and Tg may thus be adjusted to the desired application by changing the ratio between the short-chain renewable diisocyanate and the long-chain renewable diisocyanate. Accordingly the temperature for forming a film from the polyurethane may be adjusted depending on need.

The use of both the short-chain diisocyanate and the long-chain diisocyanate allows changing of the properties of the resultant product by changing the ratio between the short-chain renewable diisocyanate and the long-chain renewable diisocyanate. This allows application of the resultant product in a large range of fields. Instead of changing the types of the starting material for preparing polyurethane which typically requires a large change in the process parameters, the properties of the resultant product may be adjusted by only changing the ratio between the short-chain and the long-chain renewable diisocyanates. This is advantageous in that fine-tuning of the properties may be achieved without a major change in the process parameters.

Preferably, the diol is a renewable diol.

In one embodiment, the diol is a short-chain diol. A short-chain diol is herein defined as a diol having at most

10 atoms and at most two ether groups between the two hydroxyl groups and has at most 14 carbon atoms. A short-chain diol generally has a generally polar character. Examples of such diols include 1,3-propanediol, 1,2-propanediol, isosorbide, isomannide, isoidide, 2,3-butanediol and 1,4-butanediol. Preferably, these diols are renewable diols. The resulting polyurethane product consists of blocks made from a short-chain diisocyanate and a short-chain diol and blocks made from a long-chain diisocyanate and a short-chain diol. The blocks made from a short-chain diisocyanate and a short-chain diol are hard or even very hard blocks, with a high concentration of H-bonding urethane groups, a (very) high resulting Tg and a generally (very) hydrophilic character. Thus, a polyurethane product prepared from a short-chain diol and diisocyanates with a large proportion of the short-chain diisocyanate, for example having a ratio of the short-chain diisocyanate to the long-chain diisocyanate of 99:1-60:40, is highly polar and has a high Tg.

In another embodiment, the diol is a long-chain diol. A long-chain diol is herein defined as a diol having either more than 12 atoms or more than two ether groups between the two hydroxyl groups, or has more than 18 carbon atoms. A long-chain diol has a generally non-polar character. Long chain diols are for example 1,2-dodecanediol, polyether and polyester diols, and can also be fully renewable. An example of a fully renewable polyether diol is the polyether based on poly-1,3-propanediol, a commercial product being known by the name Cerenol ™. The resulting polyurethane product consists of blocks made from a short-chain diisocyanate and a long-chain diol and blocks made from a long-chain diisocyanate and a long-chain diol. The blocks made from a long-chain diisocyanate and a long-chain diol are soft or even very soft blocks, with a (very) low concentration of H-bonding urethane groups, a (very) low resulting Tg and a generally (very) hydrophobic character. Thus, a polyurethane product prepared from a long-chain diol and diisocyanates with a large proportion of the long-chain diisocyanate, for example having a ratio of the short-chain diisocyanate to the long-chain diisocyanate of 1:99-40:60, is highly non-polar and has a low Tg.

In one embodiment, the one or more diol in the mixture to be reacted comprises both a short-chain diol and a long-chain diol. In this embodiment comprising a short-chain diol and a long-chain diol as well as a short-chain diisocyanate and a long-chain diisocyanate, a further homogeneous distribution of blocks can be discerned. The blocks made from a short-chain diisocyanate and a short-chain diol are hard or even very hard blocks, with a high concentration of H-bonding urethane groups, a (very) high resulting Tg and a generally (very) hydrophilic character. On the other hand, the blocks made from a long-chain diisocyanate and a long-chain diol are soft or even very soft blocks, with a (very) low concentration of H-bonding urethane groups, a (very) low resulting Tg and a generally (very) hydrophobic character. The other two blocks made from a short-chain diisocyanate and a long-chain diol and from a long-chain diisocyanate and a short-chain diol have favorable intermediate properties. The simultaneous and homogeneous occurrence of these four blocks results in an even more favorable set of properties than normal polyurethanes. Especially, a new and favorable balance between otherwise contradicting properties can be reached, such as hydrophobic films with high Tg and hardness, and hydrophilic films with high elasticity.

Renewable materials used in the process according to the present invention are preferably biodegradable. Use of biodegradable building blocks for polyurethane makes the process environmentally friendly.

The weight ratio between the short-chain diisocyanate and the long-chain diisocyanate may be changed depending on the desired properties, but is typically 1:99-99:1.

In one embodiment, the weight ratio between the short-chain diisocyanate and the long-chain diisocyanate is 60:40-99:1. This results in a polyurethane product with a highly polar character and has a strong adhesion on polar substrates. The polyurethane product according to this embodiment also has a high Tg. The polyurethane product of this kind is highly advantageous for powder coatings.

In another embodiment, the weight ratio between short-chain diisocyanate and the long-chain diisocyanate is 1:99-40:60 . This results in a polyurethane with a low polar character and adheres well to non-polar substrates. The polyurethane according to this embodiment also has a low Tg. This gives higher toughness at lower temperatures. The polyurethane of this kind also has little solubility in polar solvents such as water.

In another embodiment, the weight ratio between the short-chain diisocyanate and the long-chain diisocyanate is 40:60-60:40. This results in a polyurethane with an intermediate polarity and Tg. The polyurethane of this kind is advantageous for use in e.g. an intermediate product for gluing a polar substrate and a non-polar substrate.

The mixture of the diisocyanate(s) and the diol(s) may be prepared in a desired order. The mixture may be prepared by mixing the short-chain and the long-chain renewable diisocyanate(s) and subsequently adding a diol to the diisocyanate mixture. A further diol may be additionally added thereto. Diols may first be mixed and subsequently be mixed with the isocyanates. It is also possible to prepare the mixture by mixing the short-chain or the long-chain renewable diisocyanate with the diol and subsequently adding the rest of the diisocyanate and the diol.

The mixture from which the polyurethane is prepared preferably further contains a dispersion agent which reacts with the renewable diisocyanates. The dispersion agent comprises a diol, a diamine or an aminoalcohol having at least one carboxylic group. The diol or diamine can react with the renewable diisocyanates. The dispersion agent may be dimethylolpropionic acid (DMPA). The advantage of using DMPA is that it is readily available and has a strong dispersing property. Alternatively, a renewable intrinsic dispersion agent such as lysine may be used, which results in an even more environmentally friendly system. Other possibilities include tyrosine, arginine, cysteine and serine. Such

a system is extraordinary in that the polyurethane prepolymer is prepared completely from renewable materials.

An aqueous polyurethane dispersion may be obtained according to the present invention by the addition of water to the reacted mixture of the present invention. Preparation of an aqueous polyurethane dispersion from polyurethane is described in Yongshang Lu et. al, Biomacromolecules, 2008, 9 (11), 3332-3340 'Soybean-Oil-Based Waterborne Polyurethane Dispersions:Effects of Polyol Functionality and Hard Segment Content on Properties' and Charoen Chinwanitcharoen, Journal of Applied Polymer Science, Vol. 91, 3455-3461 (2004) 'Preparation of Aqueous Dispersible Polyurethane: Effect of Acetone on the Particle Size and Storage Stability of Polyurethane Emulsion'. In the dispersion, the polyurethane prepolymer is present as latex particles. Polyurethane coatings according to the present invention may be obtained by simply evaporating the water at ambient temperature or heating after applying the dispersion on a desired surface. Other known methods may be applied to obtain polyurethane coatings from the aqueous dispersion according to the present invention.

A chain extender may be added to the dispersion according to the present invention. This results in an aqueous dispersion of chain-extended polyurethane-urea, although the degree of the chain-extension may vary depending on the specific chain extender used. Various chain extenders may be used, but the chain extender comprises 1,2-ethylenediamine (EDA) in one embodiment. This EDA enters the polyurethane particles and reacts with the isocyanate end groups of the polyurethane, thereby forming a chain-extended polyurethane-urea. Alternatively, the chain extender comprises a renewable diamine. This results in an even more environmentally friendly system. Examples of the renewable diamine are isosorbide diamine, isoidide diamine, isomannide diamine, putrescine and cadaverine. Lysine may also be used, but preferably the lysine is neutralized for this purpose. Further two preferable chain extenders are hydrazine and water. Optionally, trifunctional amines such as spermidine and four functional amines such as spermine may be used in smaller amounts. Coatings of chain-extended polyurethane-urea may be obtained by curing after applying the dispersion on a desired surface. If the chain extension has not occurred in the dispersion state, the chain extension and the cross-linking may occur simultaneously to form a polyurethane-urea coating.

In a preferred embodiment, a polyurethane prepolymer is prepared and made into an aqueous polyurethane dispersion as follows. A fatty acid-based diisocyanate and a lysine-based diisocyanate and dimethylol propionic acid are mixed. A diol, e.g. isosorbide is added to the mixture in an amount that an excess amount of diisocyanates is present with respect to isosorbide in forming a polyurethane prepolymer which are end-capped on both chain ends of isocyanates. The carboxylic acid side groups originating from DMPA residues are neutralized with triethylamine. Preferably, at least 60 mole % of the carboxylic acid side groups originating from DMPA residues are neutralized. Subsequently water is added to the polyurethane solution under vigorous stirring, to obtain an aqueous polyurethane dispersion.

In a preferred embodiment, the aqueous polyurethane dispersion is converted into an aqueous polyurethane-urea dispersion as follows. To the aqueous polyurethane dispersion, 1,2-ethylenediamine is added as a chain extender. The EDA enters the polyurethane latex particles and reacts with the isocyanate end groups of the polyurethane, thereby forming a chain-extended polyurethane-urea. This dispersion is applied to a substrate and the solvent is removed by drying in room temperature or curing. A film is obtained thereby.

Experiments

<u>Experiment 1</u>

(1) Synthesis of polyurethane prepolymer

11.3050g of a fatty acid-based diisocyanate of formula (V) (DDI 1410, >95%, from Cognis; hereinafter referred as DDI) and 0.8132g of dimethylol propionic acid (DMPA) from Aldrich were weighed into a 250 ml round bottom glass flange reactor. 0.6875g of isosorbide (polymer grade, trade name Polysorb® P, 98.5+ %) was dissolved in 4-6 ml acetone and dropwisely added to the DDI and DMPA mixture.

Acetone was used to dilute the total reaction mixture to 50 w/w%. Before the reaction started, the reaction setup was continuously flushed with inert gas ($N_2$) to facilitate the transport of water vapor. While stirring mechanically, the mixture was heated up to 40 °C using a heating mantle. Subsequently, dibutyltin dilaurate (concentration: 0.5% in solution) was injected to the solution. The reaction was carried out for 2 hours, counted from the moment that isosorbide had completely been added. Afterwards, the NCO content of the resulting PU prepolymer was determined by titration.

(2) Preparation of dispersion

Triethylamine (75 mol % relative to DMPA) was added to the aforementioned acetone solution of the PU prepolymer, neutralizing part of the carboxylic acid for one hour. After that the stirring speed was adjusted to be around 600 rpm. 40 mL de-ionized water, to obtain a 20% solid content, was injected in a continuous flow into the organic phase, excluding the amount (4.69 mL) used to dilute EDA. Subsequently an aqueous EDA (NCO : $NH_2$ = 0.7) solution was

added dropwise, and the chain extension reaction was allowed to run for one hour. The reaction temperature decreased to ~25 °C in addition of water, and then increased to 40-50 °C through the chain extension reaction. Thereafter, the polymer dispersion was discharged from the reactor. Residual acetone was distilled off with a rotary evaporator at 40 °C, the pressure ranging from 150 to 200 mbar.

(3) Curing of polyurethane dispersion latexes

Approximately 2 grams of PUDs were weighted and mixed with 0.5-1.5 w/w % thickener (Borchi® Gel L75N or 0435). The resulting mixture was applied onto an aluminum panel, using a 6 μm spiral roller applicator. These films were either left at room temperature for 30 minutes or cured in an oven at 100 °C for 10-15 minutes, resulting in films having thicknesses between 6 - 11 μm.

(4) Measurements:

SEC analysis in tetrahydrofuran (THF) was carried out using a WATERS Alliance set-up equipped with a WATERS 2695 separation module, a WATERS 2414 differential refractive index detector (40 °C) and a WATERS 2487 dual absorbance detector. The injection volume was 50 μL. PSS (2x SDV, guard-linearXL, 5m, 8x300 mm, 40°C) columns were used. The eluent flow rate was 1.0 mL/min. Calibration curves were obtained using PS standards. Data acquisition and processing were performed using Empower software.

Glass transition and melting temperatures were determined by DSC measurements, carried out with a DSC Q100 from TA Instruments. The measurements were carried out at a heating/cooling rate of 20 °C /min (unless stated otherwise). Data acquisition was carried out using Universal Analysis 2000 software.

Potentiometric titrations were performed using a Metrohm Titrino 785 DMP automatic titration device fitted with an Ag titrode. The diisocyanate functionality was converted through the reaction with molar excess of diisobutylamine (DIBA). The DIBA residue was titrated with a normalized 1 N HCl isopropanol solution. Blank measurements were carried out using the same amount of diisobutylamine. The NCO content was defined according to equation:

$$NCO\% = \frac{(Vblank - Vsample) \times [mL] * C_{HCl} \times [mol/L] * 4.2 \times [g/mol]}{Mprepolymer \times [g]} \%$$

Titration measurements were performed in duplo. A vacuum drying method was applied to obtain the polymer solid content, by heating the latex at 100 °C for more than 3 hours.

The results are shown in Table I.

Experiment 2

Excess of DDI (7.2602g, 11.9mmol) and methyl ester lysine diisocyanate of formula (I) (>95%, from Chemos GmbH; hereinafter referred as MELDI) (0.875g, 4.2mmol) were weighted into a 250 ml round bottom glass flange reactor. DMPA (0.7173g, 5.4mmol) and isosorbide (1.1475g, 7.5 mmol) were weighted into the same reactor.

The experimental procedures were carried out in a similar manner as in Experiment 1, except for that a vacuum drying method was applied to obtain the polymer solid content by heating the latex at 130 °C for more than 2 hours, that the reaction time was around 20 hours in the polyurethane prepolymer preparation step and that 100% of the carboxylic acid was neutralized in the dispersion preparation step.

Experiments 3-4

Experiments were performed in a similar way as in experiment 2, aside from the change in the ratio between DDI and MELDI which were selected as shown in Table I and the corresponding amount of other starting materials.

The results are shown in Table I.

Table I

| Ex. | DDI: MELDI (weight ratio) | NCO:OH | Mn [g/mol][a] | Polydispersity Index | $T_g$ [°C][b] |
|---|---|---|---|---|---|
| 1 | 100:0 | 1:1.35 | 1400 | 2.11 | 14 |

(continued)

| Ex. | DDI: MELDI (weight ratio) | NCO:OH | Mn [g/mol][a] | Polydispersity Index | $T_g$ [°C][b] |
|---|---|---|---|---|---|
| 2 | 89:11 | 1:1.25 | 2850 | 2.05 | 29 |
| 3 | 73:27 | 1:1.15 | 2480 | 2.14 | 38 |
| 4 | 48:52 | 1:1.19 | 2060 | 2 | 68 |
| a: measured by SEC (in THF)<br>b: measured by DSC | | | | | |

The glass transition temperature was also measured for the chain-extended polyurethane made in Experiment 1. The Tg value was 56 °C.

It can be seen that the Tg can be successfully adjusted by changing the ratio between the fatty acid-based diisocyanate (DDI) and the lysine-based diisocyanate (MELDI) to be reacted with a diol.

## Claims

**1.** Polyurethane prepolymer prepared by reacting a mixture comprising a short-chain renewable diisocyanate and a long-chain renewable diisocyanate and one or more diols,
wherein the short-chain renewable diisocyanate has at most 10 atoms and at most two ether groups between the two isocyanate groups, and has at most 16 carbon atoms in the molecule, and
wherein the long-chain renewable diisocyanate has either more than 12 atoms or more than two ether groups between the two isocyanate groups, or has more than 20 carbon atoms in the molecule.

**2.** Polyurethane prepolymer according to claim 1, wherein the short-chain renewable diisocyanate has 2-6 atoms and no ether group between the two isocyanate groups.

**3.** Polyurethane prepolymer according to claim 1, wherein the short-chain renewable diisocyanate is chosen from the group consisting of a lysine-based ester diisocyanate, a furan-based diisocyanate, a difuran-based diisocyanate, an isoidide-based diisocyanate, an isomannide-based diisocyanate, an isosorbide-based diisocyanate, putrescine-based diisocyanate, cadaverine-based diisocyanate, spermine-based diisocyanate and spermidine-based diisocyanate.

**4.** Polyurethane prepolymer according to any one of claims 1-3, wherein the long-chain renewable diisocyanate has more than 15 atoms between the two isocyanate groups.

**5.** Polyurethane prepolymer according to any one of claims 1-3, wherein the long-chain renewable diisocyanate is a dimer fatty acid-based diisocyanate or a diisocyanate formed from a fatty acid chosen from the group consisting of capric acid, lauric acid, myristic acid, myristoleic acid, palmitic acid, palmitoleic acid, stearic acid, oleic acid, linoleic acid, alpha-linoleic acid, gamma-linoleic acid, stearidonic acid, rumenic acid, beta-calendic acid, eleostearic acid, puninic acid, parinaric acid, pinolenic acid, arachidic acid, eicosenoic acid, eicosadienoic acid, eicosatrienoic acid, dihomo-gamma-linolenic acid, mead acid, eicosatetraenoic acid, arachidonic acid, eicosapentaenoic acid..

**6.** Polyurethane prepolymer according to any one of claims 1-5, wherein the one or more diol in the mixture to be reacted is a long-chain diol having either more than 12 atoms or more than two ether group between the two hydroxyl groups, or has more than 18 carbon atoms in the molecule.

**7.** Polyurethane prepolymer according to any one of claims 1-5, wherein the one or more diol in the mixture to be reacted comprises both a short-chain diol having at most 10 atoms and at most two ether group between the two hydroxyl groups and having at most 14 carbon atoms in the molecule and a long-chain diol having either more than 12 atoms or more than two ether group between the two hydroxyl groups, or has more than 18 carbon atoms in the molecule.

**8.** Polyurethane prepolymer according to claim 7, wherein the short-chain diol is chosen from the group consisting of 1,3-propanediol, 1,2-propanediol, isosorbide, isomannide, isoidide, 2,3-butanediol, 1,4-butanediol.

**9.** Polyurethane prepolymer according to claim 6, 7 or 8, wherein the long-chain diol is chosen from the group consisting of a dimer fatty acid based diol, a polyether diol, a polyester diol, 1,12-dodecanediol and poly-1,3-propanediol.

**10.** Aqueous dispersion comprising the polyurethane prepolymer according to any one of claims 1-9, wherein the mixture further contains a dispersion agent comprising a diol, a diamine or an aminoalcohol having carboxylic group which reacts with the short-chain renewable diisocyanate and the long-chain renewable diisocyanate.

**11.** Aqueous dispersion according to claim 10, wherein the dispersion agent is chosen from the group consisting of dimethylolpropionic acid (DMPA), lysine, tyrosine, arginine, cysteine and serine.

**12.** Aqueous dispersion comprising chain-extended polyurethane-urea prepared by adding a chain extender to the aqueous dispersion according to claim 10 or 11.

**13.** Aqueous dispersion according to claim 12, wherein the chain extender is chosen from the groups consisting of 1,2-ethylenediamine, isosorbide diamine, isoidide diamine, isomannide diamine, putrescine, cadaverine, lysine, neutralized lysine, hydrazine, spermine and spermidine.

**14.** Polyurethane or polyurethane-urea coating obtainable by drying or curing the dispersion according to any one of claims 10-13.

**15.** Process for preparing the aqueous dispersion of claim 10, comprising the step of reacting the short-chain renewable diisocyanate, the long-chain renewable diisocyanate, the one or more diols and the dispersion agent.

Europäisches Patentamt
European Patent Office
Office européen des brevets

# EUROPEAN SEARCH REPORT

Application Number
EP 10 00 1459

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 98/12273 A1 (PPG INDUSTRIES INC [US]) 26 March 1998 (1998-03-26)<br>* page 1, lines 6-7 *<br>* example 7 *<br>----- | 1-15 | INV.<br>C08G18/08<br>C08G18/10<br>C08G18/32<br>C08G18/72<br>C08G18/75<br>C08G18/77<br>C08G18/80 |
| A | US 5 176 956 A (JEVNE ALLAN H [US] ET AL) 5 January 1993 (1993-01-05)<br>* example I *<br>* claim 11 *<br>----- | 1-15 | |
| A | CA 2 219 545 A1 (WOODHOUSE KIMBERLY [CA]; SKARJA GARY [CA]) 28 April 1999 (1999-04-28)<br>* example 1 *<br>* figure 4 *<br>----- | 1-15 | |
| A | FR 2 743 076 A1 (ISOCHEM SA [FR]) 4 July 1997 (1997-07-04)<br>* examples 4-10 *<br>* claim 1 *<br>----- | 1-15 | TECHNICAL FIELDS SEARCHED (IPC) |
| A | US 3 358 005 A (GARBER JOHN D ET AL) 12 December 1967 (1967-12-12)<br>* examples 1,2,5,6,8 *<br>----- | 1-15 | C08G |

1

The present search report has been drawn up for all claims

| Place of search | Date of completion of the search | Examiner |
|---|---|---|
| The Hague | 22 June 2010 | Bezard, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 00 1459

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2010

| Patent document cited in search report | Publication date | Patent family member(s) | Publication date |
|---|---|---|---|
| WO 9812273 A1 | 26-03-1998 | AU 4583197 A<br>US 6087444 A | 14-04-1998<br>11-07-2000 |
| US 5176956 A | 05-01-1993 | NONE | |
| CA 2219545 A1 | 28-04-1999 | NONE | |
| FR 2743076 A1 | 04-07-1997 | NONE | |
| US 3358005 A | 12-12-1967 | CH 482761 A<br>DE 1595012 A1<br>GB 1138205 A<br>NL 6515244 A | 15-12-1969<br>05-03-1970<br>27-12-1968<br>25-05-1966 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20090253816 A
- US 20060004175 A
- US 6515164 B


### Non-patent literature cited in the description


- **G. LLIGADES.** *Biomacromolecules,* 2007, vol. 8, 686-692
- **YONGSHANG LU.** Soybean-Oil-Based Waterborne Polyurethane Dispersions:Effects of Polyol Functionality and Hard Segment Content on Properties. *Biomacromolecules,* 2008, vol. 9 (11), 3332-3340
- **CHAROEN CHINWANITCHAROEN.** Preparation of Aqueous Dispersible Polyurethane: Effect of Acetone on the Particle Size and Storage Stability of Polyurethane Emulsion. *Journal of Applied Polymer Science,* 2004, vol. 91, 3455-3461